# EUROPÄISCHE PATENTSCHRIFT

(11) **EP 3 656 263 B1**
(45) Veröffentlichungstag und Bekanntmachung des Hinweises auf die Patenterteilung: **06.01.2021**
(21) Anmeldenummer: 18208098.6
(22) Anmeldetag: 23.11.2018
(51) Int. Cl.: A47J 47/10

(54) **BEHÄLTER AUS SPRITZGEGOSSENEM KUNSTSTOFF**
CONTAINER MADE FROM INJECTION MOULDED PLASTIC
RÉCIPIENT EN MATIÈRE PLASTIQUE MOULÉE PAR INJECTION

(43) Veröffentlichungstag der Anmeldung: 27.05.2020
(73) Patentinhaber: Rotho Kunststoff AG, 5303 Würenlingen (CH)
(72) Erfinder: Thoma, Christian, 79774 Abbruck (DE); Meier, Bruno, 5417 Untersiggenthal (CH); Binder, Marc, 5333 Baldingen (CH)
(74) Vertreter: Lemcke, Brommer & Partner Patentanwälte Partnerschaft mbB

(56) Entgegenhaltungen:
- DE-U1-202016 104 490
- US-A1- 2004 011 794
- US-A1- 2012 241 450

## Beschreibung

Die vorliegende Erfindung betrifft einen Behälter aus spritzgegossenem Kunststoff, insbesondere zum Aufbewahren von Obst, Gemüse oder anderen Lebensmitteln.

Ein solcher Behälter umfasst eine Schale mit einem Schalenboden, eine Seitenwandung, einen im Wesentlichen umlaufenden, oberen Schalenrand sowie einen Behälterdeckel. Dieser Behälterdeckel dient zum zumindest teilweisen Verschließen einer Schalenöffnung, welche von dem Schalenrand umschrieben ist.

Behälter dieser Art sind in vielfachen Ausführungen seit langem bekannt. Sie werden beispielsweise zur Lagerung bzw. Aufbewahrung von Obst, Gemüse oder anderen Lebensmitteln im Kühlschrank oder bei Raumtemperatur verwendet. Hierfür werden diese Lebensmittel durch die Schalenöffnung in einen Innenbereich der Schale hineingelegt oder eingefüllt, wonach die Schalenöffnung mit dem Behälterdeckel teilweise oder vollständig verschlossen wird. Hierdurch werden die Lebensmittel während ihrer Aufbewahrung vor Umgebungseinflüssen geschützt.

Die während der Aufbewahrung von den Lebensmitteln abgesonderte oder mit den Lebensmitteln in den Behälter eingebrachte Feuchtigkeit wird an die Umgebungsluft im Innenbereich der Schale abgegeben. Hierdurch steigt die Luftfeuchtigkeit im Innenbereich der Schale insbesondere bei durch den Behälterdeckel vollständig geschlossener Schalenöffnung an. Durch diesen Anstieg der Luftfeuchtigkeit kann es zur Bildung von Kondenswasser kommen, welches sich insbesondere auf der dem Innenbereich der Schale zugewandten Innenseite des Behälterdeckels in Form einzelner Kondenswassertropfen niederschlägt. Da die meisten Kunststoffe vorwiegend hydrophobe, d.h. wasserabweisende Eigenschaften aufweisen, perlen diese Kondenswassertropfen bei den aus dem Stand der Technik bekannten Behältern vom Behälterdeckel ab und tropfen auf die im Innenbereich der Schale aufbewahrten Lebensmittel. Dies führt dazu, dass die Lebensmittel im Innenbereich der Schale ständig in Kontakt mit dem Kondenswasser geraten, wodurch es zur Bildung von Bakterien und Schimmelpilzen auf den Lebensmitteln und somit zu einem frühzeitigen Verderben der Lebensmittel kommen kann. Aufgrund dessen zeichnen sich die aus dem Stand der Technik bekannten Behälter durch eine in zeitlich Hinsicht nur begrenzte Lagerfähigkeit für Lebensmittel aus.

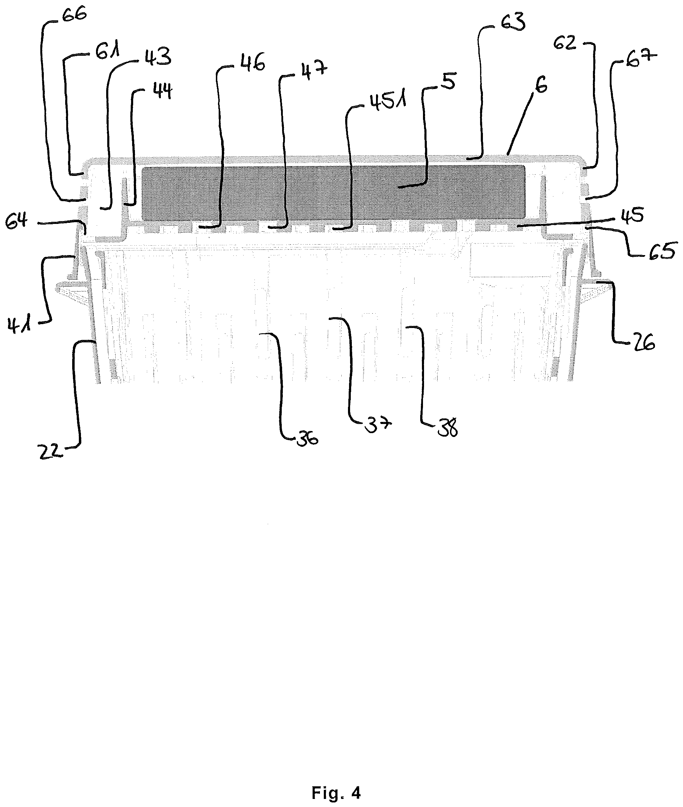

Die Druckschrift US-A-2012/241450 offenbart einen Behälter aus spritzgegossenem Kunststoff, umfassend eine Schale 34 mit einem Schalenboden, einer Seitenwandung und einem umlaufenden, oberen Schalenrand, welcher eine Schalenöffnung umschreibt, sowie einen Behälterdeckel 50 zum Verschließen der Schalenöffnung, wobei der Behälterdeckel auf einer einem Innenbereich der Schale zugewandten Innenseite eine dreidimensionale Oberflächenstruktur aufweist, welche aus einer Mehrzahl von jeweils aneinander angrenzenden Hohlkörpern besteht, deren Grundform jeweils eine an der Innenseite des Behälterdeckels angeordnete Grundfläche, eine zum Innenbereich der Schale hin orientierte Deckfläche sowie eine die Grundfläche und die Deckfläche miteinander verbindende Mantelfläche aufweist, wobei zumindest ein Teil der Hohlkörper zum Innenbereich der Schale hin offen ist (siehe die Fig. 4A-4E). Der vorliegenden Erfindung liegt die Aufgabe zugrunde, einen Behälter durch eine optimierte Lagerfähigkeit für Obst, Gemüse und andere Lebensmittel zu verbessern.

Gelöst ist diese Aufgabe durch einen Behälter mit den Merkmalen des Anspruchs 1. Bevorzugte Ausgestaltungen und Weiterbildungen des erfindungsgemäßen Behälters sind in den Ansprüchen 2 bis 12 niedergelegt.

Ein erfindungsgemäßer Behälter aus spritzgegossenem Kunststoff, welcher insbesondere zum Aufbewahren von Obst, Gemüse oder anderen Lebensmitteln ausgebildet ist, umfasst eine Schale mit einem Schalenboden, einer Seitenwandung und einem im Wesentlichen umlaufenden, oberen Schalenrand, welcher eine Schalenöffnung bildet, sowie einen Behälterdeckel zum zumindest teilweisen Verschließen der Schalenöffnung. Wesentlich bei dem erfindungsgemäßen Behälter ist, dass der Behälterdeckel auf einer dem Innenbereich der Schale zugewandten Innenseite eine dreidimensionale Oberflächenstruktur aufweist. Diese dreidimensionale Oberflächenstruktur wird durch eine Mehrzahl von aneinandergrenzenden Hohlkörpern gebildet, deren Grundform eine Grundfläche, eine Deckfläche sowie eine die Grundfläche und die Deckfläche miteinander verbindende Mantelfläche umfasst. Diese Hohlkörper sind solcherart angeordnet, dass sich die Grundfläche am Behälterdeckel befindet, während die Deckfläche zum Innenbereich der Schale hin orientiert ist. Die Grundfläche der Hohlkörper wird jeweils durch den Behälterdeckel gebildet, während die Deckfläche zumindest teilweise offen, vorzugsweise jedoch materiell gar nicht vorhanden ist. Die Mantelfläche hingegen wird durch zusätzliches Kunststoffmaterial beim Spritzgießen materiell ausgeformt.

Obst, Gemüse oder andere Lebensmittel (im Nachfolgenden insgesamt als Lebensmittel bezeichnet) können von einem Benutzer des Behälters zur Aufbewahrung in den Innenbereich der Schale hineingelegt bzw. eingefüllt werden. Durch das zumindest teilweise Verschließen der Schalenöffnung mittels des Behälterdeckels können die in dem Innenbereich der Schale aufbewahrten Lebensmittel vor Umwelteinflüssen geschützt werden. Unter einem derartigen zumindest teilweisen Verschließen der Schalenöffnung ist zu verstehen, dass der Behälterdeckel die Schalenöffnung entweder vollständig abdeckt bzw. verschließt oder dass er einen Teilbereich der Schalenöffnung offenlässt bzw. nicht abdeckt, wodurch beispielsweise Lebensmittel aus dem Innenbereich der Schale entnommen oder in den Innenbereich eingefüllt werden können. Der Behälterdeckel kann beispielsweise als Aufsatzdeckel ausgebildet sein, welcher auf den Schalenrand aufsetzbar oder in diesen Schalenrand einsetzbar ist. Es liegt jedoch auch im Rahmen der Erfindung, dass der Behälterdeckel als Klappdeckel ausgebildet ist, welcher einseitig am Schalenrand mit einem Scharnierelement befestigt ist und zugeklappt werden kann. Die Erfindung ist jedoch nicht hierauf beschränkt.

Erfindungsgemäß ist erkannt worden, dass das eingangs erwähnte, beim Stand der Technik erfolgende Abperlen und Tropfen des Kondenswassers vom Behälterdeckel aus einer nur geringen Benetzung der hydrophoben Kunststoffoberfläche des Behälterdeckels resultiert. Diese geringe Benetzung wird durch eine gegenüber den Kohäsionskräften innerhalb der Kondenswassertropfen geringere Adhäsionskraft zwischen den Kondenswassertropfen und der Oberfläche des Behälterdeckels verursacht.

Kommt es hingegen bei einem erfindungsgemäßen Behälter zu einer Kondensation der Luftfeuchtigkeit auf Innenseite des Behälterdeckels, so können sich die Kondenswassertropfen im Bereich der Mantelfläche und der Grundfläche der Hohlkörper niederschlagen, indem die Feuchtigkeit enthaltende Luft in einen Innenraum der Hohlkörper eintritt. Einzelne, bei der Kondensation gebildete Kondenswassertropfen können dann nicht nur einen Kontaktpunkt mit der Kunststoffoberfläche des Behälterdeckels ausbilden, wie im Fall eines unstrukturierten, im Wesentlichen ebenen Behälterdeckels nach dem Stand der Technik. Vielmehr können die Kondenswassertropfen erfindungsgemäß mehrere Kontaktpunkte mit der Mantelfläche und/oder der Grundfläche des Hohlkörpers ausbilden. Diese Bildung einer Mehrzahl von Kontaktpunkten führt zu einer Erhöhung der Gesamt-Adhäsionskraft zwischen den Kondenswassertropfen und der Innenseite des Behälterdeckels. Hierdurch kann die insgesamt wirkende Adhäsionskraft zwischen einem Kondenswassertropfen und dem Behälterdeckel solcherart gesteigert werden, dass diese größer als die Kohäsionskraft des Kondenswassertropfens ist. Hierdurch wird der Kondenswassertropfen im Hohlkörper gehalten, wodurch ein Abperlen dieses Kondenswassertropfens verhindert wird. Dies kann z.B. bedeuten, dass der einzelne Kondenswassertropfen von einem Hohlkörper, d.h. von dessen Mantelfläche und Grundfläche teilweise umschlossen wird und dadurch gegen ein Abperlen und Herabtropfen auf die im Innenbereich der Schale aufbewahrten Lebensmittel geschützt wird. Bei einer solchen Ausgestaltungen kommt hinzu, dass ein Kondenswassertropfen, dessen Größe zunimmt und hierbei den gesamten Innenraum des Hohlkörpers bedeckt, d.h. allseitig von der Mantelfläche umgeben ist, durch eine Vakuumbildung unter dem Tropfen gehalten wird, wenn er etwa beginnt, herunterzufallen.

Somit kann ein Kontakt zwischen den Lebensmitteln und dem Kondenswasser sowie eine Bildung von Bakterien und Schimmelpilzen auf den Lebensmitteln verringert oder sogar ganz vermieden werden. Die dreidimensionale Oberflächenstruktur führt daher zu einer im Vergleich zu den aus dem Stand der Technik bekannten Behältern verbesserten Lagerfähigkeit des erfindungsgemäßen Behälters für Lebensmittel.

Um die erfindungsgemäße Wirkung zu erzielen, müssen die Abmessungen der Hohlkörper, welche die erfindungsgemäße dreidimensionale Oberflächenstruktur bilden, solcherart gewählt sein, dass Kondenswassertropfen in den Hohlkörpern auch tatsächlich gehalten werden. Dies kann bedeuten, die Volumina der Hohlkörper den typischen Abmessungen eines Kondenswassertropfens, d.h. etwa 40 bis 50 Mikroliter, anzupassen, so dass ein solcher innerhalb des Hohlkörpers im Wesentlichen allseitig Kontakt mit der Mantelfläche des Hohlköpers erhält und hierdurch die Kontaktfläche zwischen den Kondenswassertropfen und dem Material der dreidimensionalen Oberflächenstruktur solcherart vergrößert ist, dass der Kondenswassertropfen innerhalb des Hohlkörpers gehalten wird. Wenn der Hohlkörper mit einer polygonalen Grund- und Deckfläche ausgebildet ist und die Mantelfläche dementsprechend Eckbereiche ausbildet, kann es ausreichen, wenn ein Kondenswassertropfen in einem solchen Eckbereich Kontakt mit zwei Seiten der Mantelfläche sowie der Grundfläche des Hohlkörpers erhält, um innerhalb des Hohlkörpers gehalten zu werden. Dementsprechend kann ein solcher Hohlkörper dann gegebenenfalls auch deutlich großvolumiger ausgebildet sein als das Volumen eines typischen Kondenswassertropfens.

Wenn das Volumen der Hohlkörper kleiner als typische Volumina von Kondenswassertropfen ausgebildet ist, z.B. 30 bis 40 Mikroliter, kann sich ein positiver Effekt dadurch einstellen, dass die Bildung größerer Kondenswassertropfen, die wegen ihres Gewichts leichter nach unten fallen könnten, verhindert bzw. erschwert wird.

Um den erfindungsgemäßen Effekt weiter zu steigern und zusätzlich die Menge an benötigtem Kunststoff bei der Herstellung des Behälters zu verringern, sind in einer ersten vorteilhaften Ausgestaltung des erfindungsgemäßen Behälters im Wesentlichen alle Hohlkörper durch ihre Mantelfläche begrenzt und von benachbarten Hohlkörpern getrennt. Das bedeutet, dass ein Hohlkörper sich seine Mantelfläche mit den benachbarten bzw. den um ihn herum angeordneten Hohlkörpern teilt. Hierdurch bildet die Mantelfläche zwischen den Hohlräumen der Hohlkörper Stege aus.

In einer weiteren vorteilhaften Ausgestaltung des erfindungsgemäßen Behälters sind die Grundfläche und/oder die Deckfläche des Hohlkörpers polygonal, elliptisch oder kreisförmig ausgebildet. Im Fall einer polygonalen Ausbildung weisen die Grundfläche und/oder die Deckfläche eine Anzahl an Eckpunkten n auf, welche durch eine identische Anzahl an Linien m miteinander verbunden sind. Die dadurch ausgebildeten Eckbereiche der Mantelfläche können eine Ausbildung von mindestens zwei Kontaktflächen zwischen dem Kondenswassertropfen und dieser Eckbereiche der Mantelfläche ermöglichen. Weist der Kondenswassertropfen beispielsweise ein ähnliches Ausmaß im Vergleich zum Ausmaß der Grundfläche auf, kann sich auch eine höhere Anzahl an Kontaktflächen zwischen dem Kondenswassertropfen und dem Hohlkörper ausbilden.

Vorzugweise können die Grundfläche und/oder die Deckfläche bei einer polygonalen Ausbildung eine Anzahl von Eckpunkten n im Bereich von n = 3 bis n = 10, besonders bevorzugt eine Anzahl von Eckpunkten n = 6 aufweisen. Im Fall einer Anzahl von Eckpunkten n = 6 der Grundfläche sowie der Deckfläche kann die dreidimensionale Oberflächenstruktur in Form einer Wabenstruktur auf der dem Innenbereich der Schale zugewandten Seite des Behälterdeckels ausgebildet sein. Das bedeutet, dass die dreidimensionale Oberflächenstruktur bevorzugt als Nachahmung einer in der Natur vorkommenden Bienenwabenstruktur ausgebildet sein kann. Dies optimiert bekanntermaßen das Verhältnis zwischen der Summe der Volumina der Hohlkörper und dem für die als Stege ausgebildeten Mantelflächen benötigten Kunststoffmaterial.

Um die Gefahr eines Abperlens der Kondenswassertropfen vom Behälterdeckel noch weiter zu minimieren, kann die die Hohlkörper begrenzende Mantelfläche vorzugsweise eine im Vergleich zu einem Durchmesser des Hohlkörpers deutlich geringere Stegbreite aufweisen. Hierdurch kann eine Bildung von Kondenswassertropfen auf den Stirnseiten der Stege minimiert oder sogar ganz verhindert werden. Da die Kondenswassertropfen auf den Stirnseiten der Stege nur einen oder wenige Kontaktpunkte mit der Behälterdeckeloberfläche ausbilden können, würde dies letztlich ein Abperlen bzw. Tropfen des Kondenswassers von den Stegen auf die im Innenbereich der Schale gelagerten Lebensmittel verursachen. Somit verbessert eine geringe Stegbreite der die Hohlkörper begrenzenden Mantelfläche die Lagerfähigkeit des Behälters für Lebensmittel weiter und verringert im Übrigen den notwendigen Materialeinsatz für die erfindungsgemäße dreidimensionale Struktur.

Es liegt hierbei im Rahmen der Erfindung, dass die Innenseite des Behälterdeckels entweder vollständig oder nur teilweise mit Hohlkörpern dreidimensional strukturiert ist. Die Anzahl an Hohlkörpern korreliert hierbei mit der Menge bzw. dem Volumen an Kondenswasser, welches im Bereich der Wabenstruktur gehalten werden kann. Da der Durchmesser der Hohlkörper bzw. ihr Ausmaß mit ihrer Fähigkeit zur Bindung der Kondenswassertropfen korreliert, weisen die Hohlkörper in einer bevorzugten Weiterbildung des Behälters eine kleinste lichte Weite von 4 bis 5 mm auf, besonders bevorzugt von 4,45 bis 4,55 mm.

Vorzugsweise sind die Hohlkörper hierbei mit einer Tiefe von 1,5 bis 2,5 mm, besonders bevorzugt von 1.8 bis 2.0 mm versehen.

Um die Herstellung des Behälterdeckels im Spritzgussverfahren zu vereinfachen, sind in einer weiteren vorteilhaften Ausgestaltung des erfindungsgemäßen Behälters die Grundfläche und die Deckfläche im Wesentlichen zueinander kongruent bzw. deckungsgleich. Geringe Abweichungen dieser kongruenten Ausbildung der Grundfläche und der Deckfläche können hierbei fertigungsbedingt sein. Beispielsweise kann die Grundfläche ein geringfügig kleineres Ausmaß im Vergleich zur Deckfläche aufweisen, wodurch eine konische Form der Hohlkörper entsteht, die beim Entformen des spritzgegossenen Behälterdeckels vorteilhaft ist.

Um einen Luftaustausch zwischen dem Innenbereich der Schale und der Behälterumgebung zu gewährleisten, weist der Behälterdeckel erfindungsgemäss zumindest eine Belüftungsöffnung auf. Werden beispielsweise heiße Lebensmittel in den Innenbereich der Schale eingefüllt, die Schalenöffnung mit dem Behälterdeckel vollständig verschlossen und der Behälter daraufhin in den Kühlschrank gestellt, so kann es durch Abkühlung der Lebensmittel zu einem Unterdruck im Innenbereich der Schale kommen. Hierdurch wird ein späteres Öffnen des Behälters durch einen Benutzer erschwert. Weiterhin kann es durch einen mangelnden Luftaustausch zur Bildung von unangenehmen Gerüchen und einem verfrühten Verderben der Lebensmittel kommen.

Somit erhöht die zumindest eine Belüftungsöffnung die Handhabbarkeit des Behälters und verbessert dessen Lagerfähigkeit für Lebensmittel weiter. Es liegt hierbei im Rahmen der Erfindung, dass der Behälterdeckel auch eine Mehrzahl von Belüftungsöffnungen aufweisen kann.

Um einerseits möglichst viel Kondenswassertropfen in den Hohlkörpern zu binden und andererseits einen optimalen Luftaustausch zwischen dem Innenbereich der Schale und der Behälterumgebung zu gewährleisten, ist in einer weiteren vorteilhaften Ausgestaltung des erfindungsgemäßen Behälters die zumindest eine Belüftungsöffnung im Bereich der dreidimensionalen Oberflächenstrukturen angeordnet. Um zudem die Herstellung des Behälters im Spritzgussverfahren zu vereinfachen, kann jeweils eine Belüftungsöffnung vorzugsweise einen identischen Durchmesser wie eine Deckfläche der Hohlkörper-Grundform aufweisen.

Es ist allgemein bekannt, dass Obst und Gemüse bei seiner Reifung u.a. gasförmiges Ethen bildet und an die Umgebungsluft absondert. Ethen ist eine gasförmige Kohlenwasserstoffverbindung (C₂H₄), die in Pflanzen als Phytohormon bzw. Pflanzenhormon wirkt. Beispielsweise bewirkt es die Reifung von benachbartem Obst und Gemüse. Beim Aufbewahren von Obst und Gemüse in den aus dem Stand der Technik bekannten Behältern führt ein Konzentrationsanstieg an Ethen im Innenbereich der Schale daher zu frühzeitigem Reifen und darauffolgendem Verderben des gesamten Inhalts. Aufgrund dessen zeichnen sich die aus dem Stand der Technik bekannten Behälter durch eine in zeitlicher Hinsicht nur geringe Lagerfähigkeit für Obst und Gemüse aus.

Um die Lagerfähigkeit des erfindungsgemäßen Behälters für insbesondere Obst und Gemüse weiter zu steigern, ist am Behälterdeckel erfindungsgemäss daher ein austauschbarer Filter angeordnet, welcher die zumindest eine Belüftungsöffnung im Wesentlichen vollständig abdeckt. Dieser Filter kann zur Absorption und/oder Oxidation von Ethen oder anderen gasförmigen Verbindungen dienen und beispielsweise Aktivkohle oder einen Ethen-Absorber auf Basis von Mangandioxid (MnO₂)-beschichteten Zeolithen oder Kaliumpermanganat (KMnO₄) aufweisen. Bei den erstgenannten Zeolithen handelt es sich um kristalline sowie poröse Alumosilikate, welche mit Mangandioxid beschichtet sind. Das Mangandioxid sowie das Kaliumpermanganat können aufgrund ihrer oxidierenden Eigenschaften eine Oxidation des gasförmigen Ethens verursachen, wodurch es seine reifende Wirkung auf benachbartes Obst oder Gemüse verliert. Die bei der Oxidation gebildeten Produkte können in den Poren der Zeolithe eingelagert bzw. von diesen absorbiert werden. Der Filter optimiert somit die Lagerfähigkeit des Behälters für Obst und Gemüse.

Es liegt hierbei im Rahmen der Erfindung, dass der Filter auf einer dem Innenbereich der Schale abgewandten Außenseite des Behälterdeckels angeordnet ist. In diesem Fall kann die das Ethen enthaltende Luft zunächst durch die zumindest eine Belüftungsöffnung hindurchtreten und dann von dem Filter absorbiert werden. Das Ethen kann daraufhin von der Aktivkohle absorbiert oder von dem Mangandioxid oxidiert werden. Umgekehrt kann Luft aus der Behälterumgebung durch den Filter hindurchtreten und die zumindest eine Belüftungsöffnung passieren, bevor es in den Innenbereich der Schale eindringt. Hierdurch wird letztlich ein optimaler Luftaustausch zwischen der Umgebung des Behälters und dem Innenbereich der Schale gewährleistet und die Ethenkonzentration minimiert. Dies wirkt sich positiv auf die Lagerfähigkeit des Behälters für Lebensmittel aus.

Der zuvor beschriebene Filter hat meist nur eine begrenzte Aufnahmekapazität und/oder ein begrenztes Oxidationsvermögen für Ethen oder andere gasförmige Verbindungen und muss daher von einem Benutzer in regelmäßigen Abständen ausgetauscht werden. Damit der Filter am Behälterdeckel lösbar gehalten und somit auch ausgetauscht werden kann, ist erfindungsgemäss zumindest eine Filterkappe am Behälterdeckel lösbar angeordnet. Es liegt hierbei im Rahmen der Erfindung, dass diese Filterkappe vorzugsweise zumindest ein Rastmittel umfasst, welches eine temporäre Fixierung der Filterkappe am Behälterdeckel ermöglicht. Somit ermöglicht die Filterkappe die Verwendung von austauschbaren Filtern, welche keine zusätzliche Filterhalterung aufweisen müssen. Dies wirkt sich letztlich positiv auf die Herstellbarkeit sowie die Herstellungskosten dieser Filter und damit des Behälters aus.

Damit der zuvor beschriebene Luftaustausch zwischen dem Innenbereich des Behälters und der Behälterumgebung nicht durch die Filterkappe behindert wird, weist die Filterkappe in einer weiteren vorteilhaften Ausgestaltung des erfindungsgemäßen Behälters zumindest einen Luftdurchlass auf.

In einer weiteren vorteilhaften Ausgestaltung des erfindungsgemäßen Behälters weist der Behälterdeckel eine Vertiefung auf, in welcher Vertiefung der Filter anordenbar ist. Bevorzugt ist die Vertiefung im Bereich der dreidimensionalen Oberflächenstruktur angeordnet. Befindet sich die Vertiefung auf einer der dreidimensionalen Oberflächenstruktur im Wesentlichen gegenüberliegenden Seite, d.h. auf der Außenseite des Behälterdeckels, so kann der Filter solcherart in die Vertiefung eingelegt bzw. eingesetzt werden, dass er mit einer Behälterdeckeloberfläche im Wesentlichen bündig abschließt und nicht übersteht. Diese mit der Behälterdeckeloberfläche bündige Anordnung des Filters in der Vertiefung erleichtert ein Stapeln mehrerer Behälter übereinander.

Um den Sitz des Filters in der Vertiefung weiter zu verbessern, weist die Vertiefung bevorzugt eine rahmenartige Einfassung auf. In diese rahmenartige Einfassung ist der Filter einsetzbar und wieder herausnehmbar. Diese rahmenartige Einfassung ermöglicht ein passgenaues Einsetzen des Filters und verhindert dadurch ein seitliches Verrutschen des Filters in der Vertiefung. Es liegt hierbei im Rahmen der Erfindung, dass diese rahmenartige Einfassung entweder umfänglich geschlossen ausgebildet ist oder zumindest eine Unterbrechung in ihrem Umfang aufweist.

In einer weiteren vorteilhaften Ausgestaltung des erfindungsgemäßen Behälters besteht der Behälterdeckel im Wesentlichen aus einem Deckelboden und einer randseitig um diesen umlaufenden Schürze, wobei die dreidimensionale Oberflächenstruktur im Bereich des Deckelbodens angeordnet ist. In dieser bevorzugten Ausgestaltung kann die Schalenöffnung vom Behälterdeckel entweder solcherart verschlossen werden, dass er in die Schalenöffnung eingesetzt und hierdurch die Schürze vom oberen Schalenrand umgeben wird oder solcherart, dass die Schürze den oberen Schalenrand beim Aufsetzen im Wesentlichen umschließt. Im letztgenannten Fall ist der Behälterdeckel somit als Stülpdeckel ausgebildet.

Bei einer derartigen Ausgestaltung des Behälterdeckels kann sich die Vertiefung in einer weiteren vorteilhaften Ausgestaltung des erfindungsgemäßen Behälters im Wesentlichen über den Deckelboden und/oder die Schürze hinaus erstrecken. Hierdurch können Filter mit unterschiedlichen Abmessungen verwendet werden.

In einer weiteren vorteilhaften Ausgestaltung des erfindungsgemäßen Behälters ist die Filterkappe im Querschnitt im Wesentlichen U-förmig mit einem ersten Schenkel und einem zweiten Schenkel zum Aufsetzen auf die Schürze des Behälterdeckels sowie einem diese Schenkel verbindenden Steg ausgebildet, wobei die Filterkappe solcherart in die Vertiefung einsetzbar ist, dass sie die Vertiefung, die rahmenartige Einfassung der Vertiefung sowie den in der rahmenartigen Einfassung angeordneten Filter im Wesentlichen vollständig abdeckt. Das bedeutet insbesondere, dass der Filter vom Steg der Filterkappe im Wesentlichen vollständig abgedeckt werden kann. Die zuvor beschriebenen Rastmittel können bei dieser Ausgestaltung vorzugsweise im Bereich der beiden Schenkel angeordnet sein und in hierzu komplementäre Hinterschneidungen in der Schürze des Behälterdeckels einrasten.

Wie bereits zuvor beschrieben, ist für die Lagerfähigkeit des Behälters für Lebensmittel auch ein ausreichender Luftaustausch mit der Umgebung von Bedeutung. Um diesen Luftaustausch auch bei einer U-förmigen Ausgestaltung der Filterkappe zu gewährleisten, ist der Luftdurchlass bei einer weiteren vorteilhaften Ausgestaltung des erfindungsgemäßen Behälters im Bereich des ersten und/oder des zweiten Schenkels der Filterkappe angeordnet und vorzugsweise schlitzartig ausgebildet. Insbesondere beim Stapeln von mehreren Behältern übereinander kann dadurch ein Luftaustausch zwischen dem Innenbereich der Schale und der Umgebung stattfinden.

Um die Funktionalität des Behälters weiter zu erhöhen, weist der Behälter in einer weiteren vorteilhaften Ausgestaltung zumindest einen Korbeinsatz auf, welcher in den Innenbereich der Schale einsetzbar und aus diesem wieder herausnehmbar ist. Dieser Korbeinsatz ermöglicht ein vereinfachtes Hineinlegen oder Herausnehmen von Lebensmitteln in bzw. aus dem Innenbereich des Behälters. Sollte die Aufnahmekapazität der dreidimensionalen Oberflächenstruktur für Kondenswasser nicht ausreichend sein und sich daher das abperlende und herabtropfende Kondenswasser im Bereich des Behälterbodens sammeln, so kommen die im Korbeinsatz aufbewahrten Lebensmittel nicht mit diesem Kondenswasser in Berührung. Vor allem jedoch besteht bei Lebensmittelbehältern der vorliegenden Art das Problem, dass sich nicht nur an der Innenseite des Behälterdeckels Kondenswasser bilden kann, sondern auch im Inneren der Schale, d.h. insbesondere an deren Seitenwandung. Das Vorsehen eines Korbeinsatzes verhindert, dass die im Behälter gelagerten Lebensmittel mit etwaigem, an der Seitenwandung der Schale gebildeten Kondenswasser in Berührung kommen. Nicht zuletzt verhindert der Korbeinsatz, dass die Lebensmittel direkt auf dem Schalenboden aufliegen. Denn dies kann sehr nachteilig sein, da die Gefahr besteht, dass an der Schalenwandung gebildetes Kondenswasser zum Schalenboden hin abläuft und sich gegebenenfalls dort sammelt.

Die Kombination der erfindungsgemäßen dreidimensionalen Oberflächenstruktur der Innenseite des Behälterdeckels mit dem bevorzugt vorhandenen Korbeinsatz verhindert im Ergebnis besonders wirkungsvoll, dass im Behälter gelagerte Lebensmittel mit etwaigem Kondenswasser in Berührung kommt bzw. bleibt, das sich vorzugsweise an der Innenseite des Behälterdeckels und an der Seitenwandung der Schale bildet und sich gegebenenfalls am Schalenboden sammelt.

Damit der Korbeinsatz von einem Benutzer in einfacher Weise aus dem Innenbereich des Behälters entnommen werden kann, kann dieser Korbeinsatz vorzugsweise zumindest einen Griff aufweisen. Dieser Griff kann vom Benutzer ergriffen werden, um den Korbeinsatz aus dem Innenbereich der Schale herauszunehmen.

In einer bevorzugten Weiterbildung des Behälters ist der Korbeinsatz als Sieb ausgebildet. Lebensmittel, welche sich in dem Sieb befinden, können zunächst vom Benutzer gewaschen werden, wonach das Sieb in den Innenbereich der Schale eingesetzt werden kann. Außerdem kann etwaiges, auf den Lebensmitteln gebildetes Kondenswasser durch die Sieböffnungen ablaufen, so dass die Lebensmittel keinen langfristigen Kontakt mit dem Kondenswasser haben.

Anhand der beigefügten Zeichnungen wird ein Ausführungsbeispiel des erfindungsgemäß ausgestalteten Behälters näher beschrieben und erläutert. Es zeigen:
- Figur 1: eine Explosionsdarstellung eines Ausführungsbeispiels eines erfindungsgemäßen Behälters;
- Figur 2: eine perspektivische Ansicht von unten des Behälterdeckels des Ausführungsbeispiels aus Figur 1 mit dreidimensionaler Oberflächenstruktur;
- Figur 3: ein Detail des Ausführungsbeispiels aus Figur 1 in Teilexplosionssowie Schnittdarstellung; sowie
- Figur 4: ein weiteres Detail des Ausführungsbeispiels aus Figur 1 in Schnittdarstellung;
- Figur 5: eine Außenansicht des Ausführungsbeispiels aus Figur 1 in perspektivischer Darstellung.

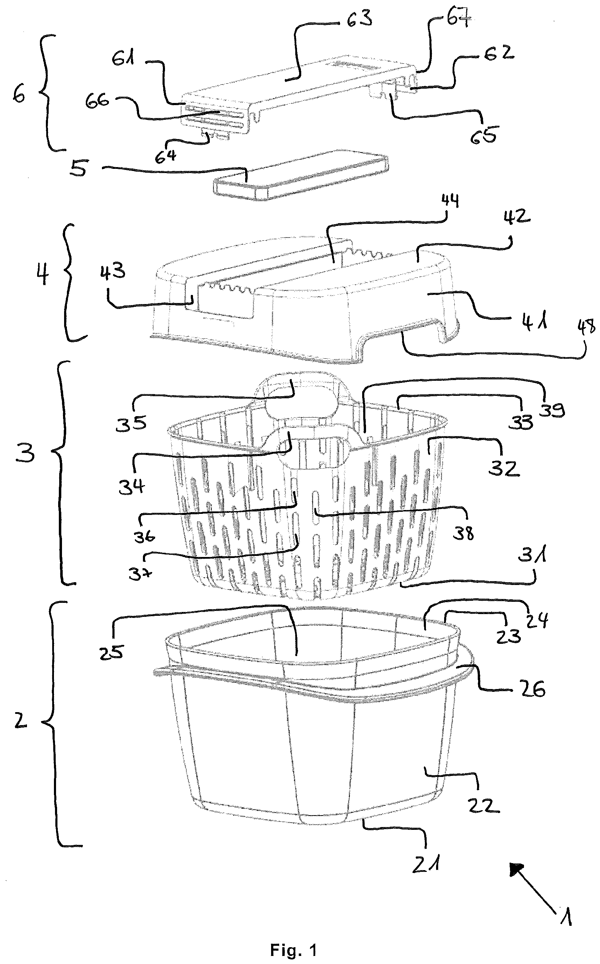

Figur 1 zeigt eine Explosionsdarstellung eines Ausführungsbeispiels eines erfindungsgemäß ausgestalteten Behälters 1, welcher eine Schale 2, einen Korbeinsatz 3, einen Behälterdeckel 4, einen Filter 5 sowie eine Filterkappe 6 aufweist. Im vorliegenden Ausführungsbeispiel sind, mit Ausnahme des Filters 5, alle Bestandteile des erfindungsgemäßen Behälters 1 als Spritzgussformteile aus Polypropylen ausgebildet.

Die Schale 2 umfasst einen Schalenboden 21 sowie eine umlaufende Seitenwandung 22, die von einem umlaufenden, oberen Schalenrand 23 begrenzt ist. Der Schalenrand 23 umschließt eine Schalenöffnung 24. Durch diese Schalenöffnung 24 kann der Korbeinsatz 3 in einen Innenbereich 25 der Schale 2 eingesetzt werden. In Abwesenheit des Korbeinsatzes 3 können auch Obst, Gemüse oder andere Lebensmittel direkt in diesen Innenbereich 25 der Schale 2 eingefüllt bzw. eingelegt werden. Im vorliegenden Ausführungsbeispiel weist der obere Schalenrand 23 einen gegenüber dem Schalenboden 21 größeren Durchmesser auf. Da der Schalenrand 23 und der Schalenboden 21 durch die Seitenwandung 22 miteinander verbunden sind, weist die Schale 2 somit eine konische Form auf. Diese konische Form der Schale 2 resultiert aus der Herstellung der Schale 2 im Spritzgussverfahren und hat den Vorteil, dass beim Aufbewahren mehrerer derartiger Behälter 1, einzelne Schalen 2 ineinander gestellt werden können. Diese Nestbarkeit von mehreren Schalen 2 führt zu einem deutlich geringeren Platzbedarf beim Lagern der Behälter 1.

Der Korbeinsatz 3 weist ein im Vergleich zur Schale 2 geringeres Ausmaß auf, so dass der Korbeinsatz 3 in den Innenbereich 25 der Schale 2 eingesetzt werden kann. Der Korbeinsatz 3 umfasst einen Korbeinsatzboden 31, eine Korbeinsatzwandung 32 sowie einen oberen, umlaufenden Korbeinsatzrand 33. Im Bereich des oberen Korbeinsatzrandes 33 sind im vorliegenden Ausführungsbespiel des Behälters 1 zwei im Wesentlichen gegenüberliegend angeordnete Griffe 34, 35 angeordnet, welche im Spritzgussverfahren einstückig mit dem oberen Korbeinsatzrand 33 ausgebildet wurden. Mittels dieser beiden Griffe 34, 35 kann der Korbeinsatz 3 von einem Benutzer in den Innenbereich 25 der Schale 2 in einfacher Weise eingesetzt und wieder aus diesem Innenbereich 25 herausgenommen werden. Im vorliegenden Ausführungsbeispiel ist der Korbeinsatz 3 als Sieb ausgebildet und weist daher eine Vielzahl an schlitzartigen Sieböffnungen 36, 37, 38 auf. Aufgrund der Herstellung des Korbeinsatzes 3 im Spritzgussverfahren weist auch dieser eine im Wesentlichen konische Form auf.

Der Behälterdeckel 4 dient zum Verschließen der Schalenöffnung 24. Im vorliegenden Ausführungsbeispiel umfasst der Behälterdeckel 4 eine im Wesentlichen umlaufende Schürze 41 sowie einen Deckelboden 42 und ist als Stülpdeckel ausgebildet. Der Behälterdeckel 4 kann solcherart auf den oberen Schalenrand 23 der Schale 2 aufgesetzt werden, dass seine Schürze 41 den oberen Schalenrand 23 im Wesentlichen umschließt. Für einen optimalen Sitz des Behälterdeckels 4 weist die Seitenwandung 22 der Schale 2 eine umlaufende Auskragung 26 auf, auf welche die Schürze 41 aufgesetzt werden kann.

Im vorliegenden Ausführungsbeispiel ist der Filter 5 im Wesentlichen quaderförmig ausgebildet und weist einen Ethen-Absorber auf Basis von Aktivkohle oder von Mangandioxid beschichteten Zeolithen auf. Zur Anordnung des Filters 5 am Behälterdeckel 4 weist der Behälterdeckel 4 im vorliegenden Ausführungsbeispiel eine Vertiefung 43 mit darin ausgebildeter rahmenartiger Einfassung 44 auf. Die Vertiefung 43 erstreckt sich über den Deckelboden 42 sowie teilweise über die Schürze 41 hinweg.

Der Filter 5 kann von einem Benutzer in die rahmenartige Einfassung 44 im Wesentlichen passgenau eingesetzt werden. Hierdurch verhindert die rahmenartige Einfassung 44 ein seitliches Verrutschen des Filters 5 in der Vertiefung 43. Damit auch ein vertikales Herausfallen des Filters 5 aus der Vertiefung 43 bzw. der rahmenartigen Einfassung 44 verhindert werden kann, wird im vorliegenden Ausführungsbeispiel die Filterkappe 6 solcherart in die Vertiefung 43 eingesetzt, dass sie die Vertiefung 43, die rahmenartige Einfassung 44 sowie den in der rahmenartigen Einfassung 44 angeordneten Filter 5 im Wesentlichen vollständig abdeckt (siehe auch Figur 4). Hierfür ist die Filterkappe 6 im Querschnitt im Wesentlichen U-förmig mit einem ersten Schenkel 61, einem zweiten Schenkel 62 sowie einem diese Schenkel 61, 62 verbindenden Steg 63 ausgebildet. Damit die Filterkappe 6 lösbar in der Vertiefung 43 angeordnet werden kann, sind im Bereich der beiden Schenkel 61, 62 als Rastnasen ausgebildete Rastmittel 64, 65 angeordnet. Beim Einsetzen der Filterkappe 6 in die Vertiefung 43 rasten die Rastmittel 64, 65 in hierzu komplementäre Hinterschneidungen im Bereich der Vertiefung ein (in Figur 1 nicht dargestellt, siehe Figur 4). Weiterhin weist die Filterkappe 6 mehrere schlitzartig ausgebildete Luftdurchlässe 66, 67 auf, welche einen Luftaustausch zwischen dem Innenbereich 25 der Schale 2 und der Behälterumgebung gewährleisten.

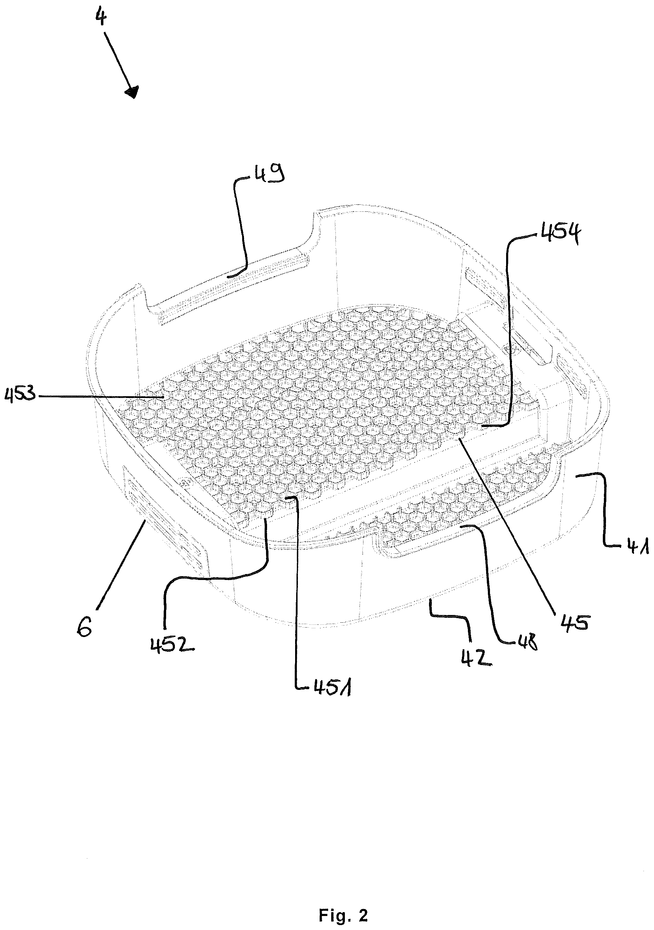

Figur 2 zeigt eine perspektivische Ansicht des Behälterdeckels 4 des Ausführungsbeispiels aus Figur 1 von unten. Auf einer der Vertiefung 43 gegenüberliegenden Seite, d.h. auf der dem Innenbereich 25 der Schale 2 zugewandten Innenseite weist der Behälterboden 42 eine dreidimensionale Oberflächenstruktur 45 auf. Diese dreidimensionale Oberflächenstruktur 45 ist als eine Mehrzahl von aneinander angrenzenden Hohlkörpern 451 mit einer am Behälterdeckel angeordneten Grundfläche 452, einer in Richtung des Innenbereichs der Schale 2 ausgerichteten Deckfläche 453 sowie einer die Grundfläche 452 und die Deckfläche 453 miteinander verbindenden Mantelfläche 454 ausgebildet. Die Deckfläche 453 ist jeweils offen. Im vorliegenden Ausführungsbeispiel sind die Grundfläche 452 sowie die Deckfläche 453 polygonal ausgebildet, wobei die Grundfläche 452 und die Deckfläche 453 eine Anzahl an Eckpunkten n von n = 6 aufweisen. Die Grundfläche 452 und die Deckfläche 453 sind im Wesentlichen kongruent, d.h. deckungsgleich zueinander ausgerichtet. Des Weiteren sind alle Hohlkörper 451 durch ihre Mantelfläche 454 begrenzt und von benachbarten Hohlkörpern 451 getrennt.

Im vorliegenden Ausführungsbeispiel ergibt sich daher eine Wabenstruktur als dreidimensionale Oberflächenstruktur 45. Das bedeutet, dass die dreidimensionale Oberflächenstruktur 45 des Behälterdeckels 4 einer Bienenwabe nachgeahmt ist.

Die während der Aufbewahrung von den Lebensmitteln abgesonderte oder mit den Lebensmitteln in den Behälter 1 eingebrachte Feuchtigkeit wird - wie bereits zuvor beschrieben - an die Umgebungsluft im Innenbereich 25 der Schale 2 abgegeben. Dies geschieht insbesondere dann, wenn der Behälter 1 in den Kühlschrank gestellt und dort gelagert wird. Hierdurch steigt die Luftfeuchtigkeit im Innenbereich 25 der Schale 2 bei durch den Behälterdeckel 4 geschlossener Schalenöffnung 24 an. Durch diesen Anstieg der Luftfeuchtigkeit kann es zur Bildung von Kondenswasser kommen, welches sich bevorzugt auf der dem Innenbereich der Schale 2 zugewandten Seite des Behälterdeckels 4 in Form einzelner Kondenswassertropfen niederschlägt. Aufgrund der als Wabenstruktur ausgebildeten dreidimensionalen Oberflächenstruktur 45 können sich diese Kondenswassertropfen im Bereich der Mantelfläche 454 und der Grundfläche 452 der Hohlkörper 451 niederschlagen, indem die die Feuchtigkeit enthaltende Luft durch die Deckfläche 453 in einen Innenraum der Hohlkörper 451 eintritt.

Einzelne, bei der Kondensation gebildete Kondenswassertropfen können mehrere Kontaktpunkte mit der Mantelfläche 454 und/oder der Grundfläche 452 des Hohlkörpers 451 ausbilden. Diese Bildung mehrerer Kontaktpunkte führt zu einer Erhöhung der Adhäsionskraft zwischen den Kondenswassertropfen und der Innenseite des Behälterdeckels 4. Dadurch werden Kondenswassertropfen im Hohlkörper 451 besser gehalten anstatt, wie bei einem Behälterdeckel ohne dreidimensionale Oberflächenstruktur, abzuperlen und auf die Lebensmittel zu tropfen. Letztlich wird hierdurch ein Kontakt zwischen den Lebensmitteln und dem Kondenswasser sowie eine Bildung von Bakterien und Schimmelpilzen auf den Lebensmitteln verringert oder sogar ganz verhindert. Die dreidimensionale Oberflächenstruktur 45 führt daher zu einer im Vergleich zu den aus dem Stand der Technik bekannten Behältern verbesserte Lagerfähigkeit des Behälters 1 für Lebensmittel. Im vorliegenden Ausführungsbeispiel ist der dem Innenbereich 25 der Schale 2 zugewandte Seite des Behälterbodens 42 im Wesentlichen vollständig mit der dreidimensionalen Oberflächenstruktur 45 bedeckt. Es liegt jedoch auch im Rahmen der Erfindung, dass nur ein Teil des Behälterbodens dreidimensional strukturiert ist. Im vorliegenden Ausführungsbeispiel weisen die Hohlkörper 451 eine kleinste lichte Weite, d.h. einen Abstand zwischen jeweils zwei parallel gegenüberliegenden geraden Abschnitten der Mantelfläche 454 von 4,511 mm auf. Die Tiefe der Hohlkörper 451, also die Steghöhe der Mantelflächen 454 beträgt hierbei 1,9 mm, woraus sich ein Volumen der Hohlkörper 451 von ca. 34 Mikrolitern ergibt. Dies entspricht einem kleinen Tropfen (ein Normtropfen in der Pharmazie enthält 50 Mikroliter), so dass die Bildung von größeren Kondenswassertropfen erschwert wird. Auch die Bildung eines Vakuums unter einem Tropfen, der sich ablösen will, wird hierdurch befördert.

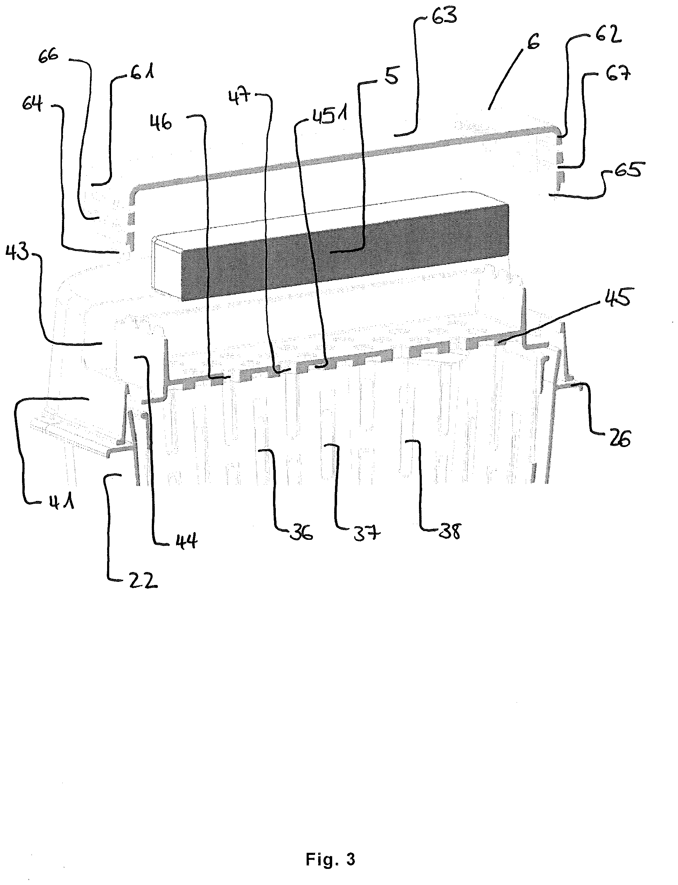

Figur 3 zeigt ein Detail des Ausführungsbeispiels aus Figur 1 in Teilexplosionssowie Schnittdarstellung. Der Korbeinsatz 3 ist in dieser Figur 2 in seinem in den Innenbereich 25 der Schale 2 eingesetzten Zustand zu erkennen. Wie hierbei nochmals ersichtlich wird, weist der Korbeinsatz 3 ein gegenüber der Schale 2 bzw. dessen Innenbereich 25 geringeres Ausmaß auf. Hierdurch wird zwischen der Korbeinsatzwandung 32 und der Seitenwandung 22 der Schale 2 ein Abstand eingehalten. Dies hat den Vorteil, dass der Korbeinsatz 3 sowie darin aufbewahrte Lebensmittel nicht mit Kondenswasser, welches sich gegebenenfalls auch im Bereich der Seitenwandung 22 der Schale 2 niederschlagen kann, in Berührung kommt. Hierdurch kann aus vorgenannten Gründen eine Bakteriensowie Schimmelpilzbildung auf den in dem Korbeinsatz 3 aufbewahrten Lebensmitteln weiter verringert oder sogar ganz verhindert werden.

Beim Aufsetzen des Behälterdeckels 4 auf den oberen Schalenrand 23 umschließt die Schürze 41 des Behälterdeckels 4 den oberen Schalenrand 23 der Schale 2 vollständig und sitzt auf der umlaufenden Auskragung 26 der Seitenwandung 22 auf. Hierdurch wird ein optimaler Sitz des Behälterdeckels 4 beim Verschließen der Schalenöffnung 24 gewährleistet. Wie aus Figur 3 weiterhin ersichtlich ist, weist der Deckelboden 42 im Bereich der rahmenartigen Einfassung 44 eine Vielzahl an Belüftungsöffnungen 46, 47 auf. Wie bereits zuvor erwähnt, ermöglichen diese Belüftungsöffnungen 46, 47 einen Luftaustausch zwischen dem Innenbereich 25 der Schale 2 und der Behälterumgebung. Diese Belüftungsöffnungen 46, 47 sind im vorliegenden Ausführungsbeispiel korrespondierend zu Grundflächen 452 von Hohlkörpern 451 angeordnet. Hierdurch kann die Luft aus dem Innenbereich 25 der Schale 2 zunächst durch die Hohlkörper 451 und dann durch die Belüftungsöffnungen 46, 47 in Umgebung austreten. Um neben diesem Luftaustausch trotzdem genügend Hohlkörper 451 zum Sammeln bzw. Halten von Kondenswassertropfen bereitzustellen, ist die Anzahl an Belüftungsöffnungen 46, 47 geringer als die Anzahl an Hohlkörpern 451.

Figur 4 zeigt ein weiteres Detail des Ausführungsbeispiels aus Figur 1 in Schnittdarstellung. Hierbei ist der Filter 5 in die rahmenartige Einfassung 44 des Behälterdeckels 4 eingelegt bzw. eingesetzt. Der Filter 5 überdeckt hierbei alle Belüftungsöffnungen 46, 47, welche im Bereich der rahmenartigen Einfassung 44 des Deckelbodens 42 angeordnet sind.

Durch das Einsetzen des Filters 5 in die rahmenartige Einfassung 44 wird der Filter von dieser Einfassung 44 solcherart gehalten, dass der Filter 5 gegen ein seitliches Verrutschen im Bereich der Vertiefung 43 des Behälterdeckels 4 geschützt ist. Die Filterkappe 6 ist in die Vertiefung 43 solcherart eingesetzt, dass die als Rastnasen ausgebildeten Rastmittel 64, 65 in hierzu komplementäre Hinterschneidungen des Behälterdeckels eingerastet sind. Der Filter 5 ist hierdurch sandwichartig zwischen dem Deckelboden 42 im Bereich der rahmenartigen Einfassung 44 und dem Steg 63 der Filterkappe 6 eingeschlossen. Der Filter 5 wird hierdurch gegen ein Herausfallen aus der rahmenartigen Einfassung 44 in vertikaler Richtung gesichert.

Wie bereits zuvor erläutert, ist auch aus Figur 4 ersichtlich, dass die Anzahl an Belüftungsöffnungen 46, 47, welche jeweils korrespondierend zur Grundfläche 452 eines Hohlkörpers 451 angeordnet sind, geringer ist als die Anzahl an Hohlkörpern 451 der dreidimensionalen Struktur 45. Hierdurch ist zum einen ein optimaler Luftaustausch zwischen dem Innenbereich 25 der Schale 2 und der Behälterumgebung gewährleistet. Weiterhin kann trotz der Belüftungsöffnungen 46, 47 in den Hohlkörpern 451, welche nicht im Bereich der Belüftungsöffnungen 46, 47 angeordnet sind, weiterhin eine Kondensation von Luftfeuchtigkeit und damit eine Bildung von Kondenswassertropfen stattfinden.

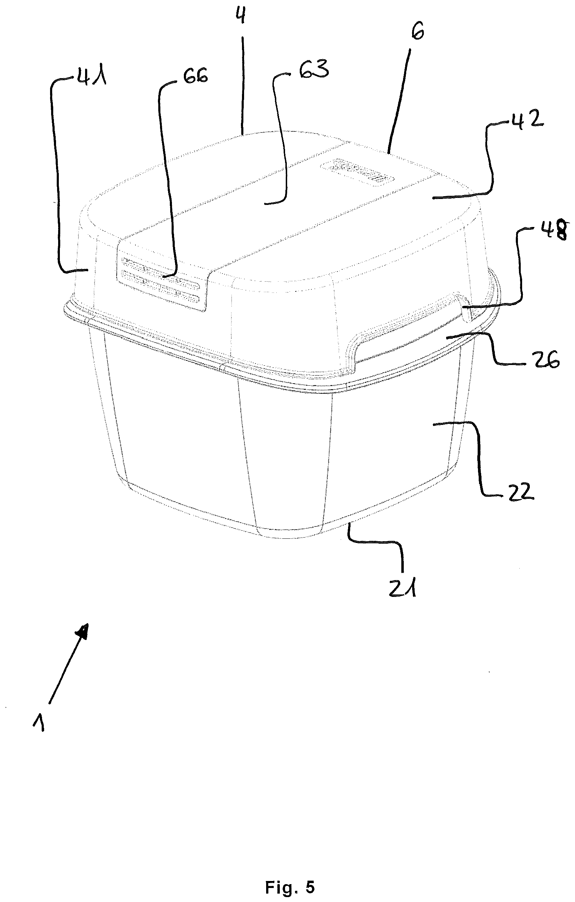

Figur 5 zeigt eine Außenansicht des Ausführungsbeispiels aus Figur 1 in perspektivischer Darstellung. Diese Figur 5 zeigt, dass die Filterkappe 6 in ihrem in die Vertiefung 43 eingesetzten Zustand bündig mit der Oberfläche des Behälterdeckels 4 abschließt. Diese bündige Anordnung der Filterkappe 6 ermöglicht ein ungehindertes Stapeln mehrerer Behälter 1 übereinander. Weiterhin weist der Behälterdeckel 4 zwei Ausnehmungen 48, 49 im Bereich der Schürze 41 auf. Indem ein Benutzer in diese beiden Ausnehmungen 48, 49 eingreift, kann er den Behälterdeckel 4 in einfacher Weise vom oberen Rand 23 der Schale 2 abnehmen, ohne dass ein zusätzlicher Haltegriff am Behälterdeckel 4 angeordnet sein müsste.

## Patentansprüche

1. Behälter (1) aus spritzgegossenem Kunststoff, insbesondere zum Aufbewahren von Obst, Gemüse oder anderen Lebensmitteln, umfassend eine Schale (2) mit einem Schalenboden (21), einer Seitenwandung (22) und einem im Wesentlichen umlaufenden, oberen Schalenrand (23), welcher eine Schalenöffnung (24) umschreibt, sowie einen Behälterdeckel (4) zum zumindest teilweisen Verschließen der Schalenöffnung (24), wobei der Behälterdeckel (4) auf einer einem Innenbereich (25) der Schale (2) zugewandten Innenseite eine dreidimensionale Oberflächenstruktur (45) aufweist, welche aus einer Mehrzahl von jeweils aneinander angrenzenden Hohlkörpern (451) besteht, deren Grundform jeweils eine an der Innenseite des Behälterdeckels (4) angeordnete Grundfläche (452), eine zum Innenbereich (25) der Schale (2) hin orientierte Deckfläche (453) sowie eine die Grundfläche (452) und die Deckfläche (453) miteinander verbindende Mantelfläche (454) aufweist, und wobei zumindest ein Teil der Hohlkörper (451) zum Innenbereich (25) der Schale (2) hin offen ist
**dadurch gekennzeichnet,**
**dass** der Behälterdeckel (4) zumindest eine Belüftungsöffnung (46, 47) aufweist,
**dass** am Behälterdeckel (4) zumindest ein austauschbarer Filter (5) angeordnet ist, welcher die zumindest eine Belüftungsöffnung (46, 47) abdeckt, und dass zumindest eine Filterkappe (6) an einer vom Innenbereich (25) der Schale (2) abgewandten Außenseite des Behälterdeckels (4) lösbar angeordnet ist, wobei die Filterkappe (6) den zumindest einen Filter (5) am Behälterdeckel (4) überdeckt und vorzugsweise zumindest einen Luftdurchlass (66, 67) aufweist.

2. Behälter (1) nach Anspruch 1,
**dadurch gekennzeichnet,**
**dass** im Wesentlichen alle Hohlkörper (451) durch an den Behälterdeckel (4) angespritzte, die Mantelflächen (454) der Grundformen bildende Stege gefertigt und von benachbarten Hohlformen (451) getrennt sind.

3. Behälter (1) nach zumindest einem der Ansprüche 1 oder 2,
**dadurch gekennzeichnet,**
**dass** die Grundfläche (452) und/oder die Deckfläche (453) der Grundform der Hohlkörper (451) polygonal, elliptisch oder kreisförmig ausgebildet sind, wobei die Grundfläche (452) und/oder die Deckfläche (453) bei einer polygonalen Ausbildung bevorzugt eine Anzahl an Eckpunkten n im Bereich von n = 3 bis n = 10, besonders bevorzugt eine Anzahl an Eckpunkten n = 6 aufweisen.

4. Behälter (1) nach zumindest einem der Ansprüche 1 bis 3,
**dadurch gekennzeichnet,**
**dass** die Grundfläche (452) und die Deckfläche (453) im Wesentlichen zueinander kongruent sind.

5. Behälter (1) nach zumindest einem der Ansprüche 1 bis 4,
**dadurch gekennzeichnet,**
**dass** die zumindest eine Belüftungsöffnung (46, 47) im Bereich der dreidimensionalen Oberflächenstruktur (45) angeordnet ist.

6. Behälter (1) nach zumindest einem der Ansprüche 1 bis 5,
**dadurch gekennzeichnet,**
**dass** der Behälterdeckel (4) an seiner Außenseite eine Vertiefung (43) für den Filter (5) aufweist, wobei die Vertiefung (43) vorzugsweise im Bereich der dreidimensionalen Oberflächenstruktur (45) angeordnet ist.

7. Behälter (1) nach Anspruch 6,
**dadurch gekennzeichnet,**
**dass** die Vertiefung (43) eine rahmenartige Einfassung (44) zum reversiblen Einsetzen des Filters (5) aufweist.

8. Behälter (1) nach zumindest einem der Ansprüche 1 bis 7,
**dadurch gekennzeichnet,**
**dass** der Behälterdeckel (4) im Wesentlichen aus einem Deckelboden (42) und einer randseitig um diesen umlaufenden Schürze (41) besteht, wobei die dreidimensionale Oberflächenstruktur (45) im Bereich des Deckelbodens (42) angeordnet ist.

9. Behälter (1) nach Anspruch 8,
**dadurch gekennzeichnet,**
**dass** sich die Vertiefung (43) im Wesentlichen über den Deckelboden (42) und/oder die Schürze (41) hinweg erstreckt.

10. Behälter (1) nach zumindest einem der Ansprüche 6 bis 9,
**dadurch gekennzeichnet,**
**dass** die Filterkappe (6) im Querschnitt im Wesentlichen U-förmig mit einem ersten (61) und einem zweiten Schenkel (62) zum Aufsetzen auf die Schürze (41) sowie einem diese Schenkel (61, 62) verbindenden Steg (63) zum Einsetzen in die Vertiefung (43) ausgebildet und solcherart in die Vertiefung (43) einsetzbar ist, dass sie die Vertiefung (43), die rahmenartige Einfassung (44) sowie einen in der rahmenartigen Einfassung (44) angeordneten Filter (5) im Wesentlichen vollständig abdeckt.

11. Behälter (1) nach Anspruch 10,
**dadurch gekennzeichnet,**
**dass** der zumindest eine Luftdurchlass (66, 67) im Bereich des ersten und/oder des zweiten Schenkels (61, 62) der Filterkappe (6) angeordnet und vorzugsweise schlitzartig ausgebildet ist.

12. Behälter (1) nach zumindest einem der Ansprüche 1 bis 11,
**dadurch gekennzeichnet,**
**dass** der Behälter (1) weiterhin zumindest einen Korbeinsatz (3) aufweist, welcher in den Innenbereich (25) der Schale (2) einsetzbar und wieder herausnehmbar ist, wobei der Korbeinsatz (3) vorzugsweise als Sieb ausgebildet ist.

## Claims

1. Container (1) made of injection-moulded plastics, especially for storing fruit, vegetables or other foodstuffs, comprising a bowl (2) having a bowl base (21), a side wall (23) and a substantially circumferential, upper bowl rim (23) which encircles a bowl opening (24), and a container lid (4) for at least partial closure of the bowl opening (24), wherein the container lid (4) has on an inner side that faces towards an inner region (25) of the bowl (2) a three-dimensional surface structure (45) which consists of a plurality of mutually adjacent hollow bodies (451), the basic shape of each of which has a base surface (452) arranged on the inner side of the container lid (4), a top surface (453) oriented towards the inner region (25) of the bowl (2), and a lateral surface (454) connecting the base surface (452) and the top surface (453) to one another, and wherein at least a portion of the hollow bodies (451) is open towards the inner region (25) of the bowl (2),
**characterised in that**
the container lid (4) has at least one ventilation opening (46, 47);
on the container lid (4) there is arranged at least one interchangeable filter (5) which covers the at least one ventilation opening (46, 47); and at least one filter cover (6) is detachably arranged on an outer side of the container lid (4) that faces away from the inner region (25) of the bowl (2), the filter cover (6) covering the at least one filter (5) on the container lid (4) and preferably having at least one air vent (66, 67).

2. Container (1) according to claim 1,
**characterised in that**
substantially all hollow bodies (451) are made, and separated from adjacent hollow bodies (451), by ribs which are moulded integrally with the container lid (4) and form the lateral surfaces (454) of the basic shapes.

3. Container (1) according to at least one of claims 1 and 2,
**characterised in that**
the base surface (452) and/or the top surface (453) of the basic shape of the hollow bodies (451) are polygonal, elliptical or circular, the base surface (452) and/or the top surface (453) in the case of a polygonal configuration preferably having a number of vertices n in the range of from n = 3 to n = 10, especially preferably a number of vertices n = 6.

4. Container (1) according to at least one of claims 1 to 3,
**characterised in that**
the base surface (452) and the top surface (453) are substantially congruent with one another.

5. Container (1) according to at least one of claims 1 to 4,
**characterised in that**
the at least one ventilation opening (46, 47) is arranged in the region of the three-dimensional surface structure (45).

6. Container (1) according to at least one of claims 1 to 5,
**characterised in that**
the container lid (4) has on its outer side a recess (43) for the filter (5), the recess (43) preferably being arranged in the region of the three-dimensional surface structure (45).

7. Container (1) according to claim 6,
**characterised in that**
the recess (43) has a frame-like surround (44) for reversible insertion of the filter (5).

8. Container (1) according to at least one of claims 1 to 7,
**characterised in that**
the container lid (4) consists essentially of a lid base (42) and a skirt (41) running around the rim thereof, the three-dimensional surface structure (45) being arranged in the region of the lid base (42).

9. Container (1) according to claim 8,
**characterised in that**
the recess (43) extends substantially over the lid base (42) and/or the skirt (41).

10. Container (1) according to at least one of claims 6 to 9,
**characterised in that**
the filter cover (6) is substantially U-shaped in cross-section, with a first limb (61) and a second limb (62) for mounting on the skirt (41) and with a web (63) connecting those limbs (61, 62) for insertion into the recess (43), and is insertable into the recess (43) in such a way that it substantially entirely covers the recess (43), the frame-like surround (44) and a filter (5) arranged in the frame-like surround (44).

11. Container (1) according to claim 10,
**characterised in that**
the at least one air vent (66, 67) is arranged in the region of the first and/or second limbs (61, 62) of the filter cover (6) and is preferably of slot-like configuration.

12. Container (1) according to at least one of claims 1 to 11,
**characterised in that**
the container (1) further has at least one basket insert (3) which can be inserted into the inner region (25) of the bowl (2) and removed again therefrom, the basket insert (3) preferably being in the form of a strainer.

## Revendications

1. Récipient (1) en matière plastique moulée par injection, en particulier pour le stockage de fruits, légumes ou autres produits alimentaires, comportant une coque (2) dotée d'une base de coque (21), d'une paroi latérale (22) et un bord de coque supérieur (23) sensiblement périphérique, lequel délimite une ouverture de coque (24), ainsi qu'un couvercle de récipient (4) pour fermer au moins partiellement l'ouverture de coque (24), dans lequel le couvercle de coque (4) comprend, sur un côté intérieur tourné vers une région intérieure (25) de la coque (2), une structure de surface tridimensionnelle (45), laquelle est constituée d'une pluralité de corps creux (451) respectivement adjacents les uns aux autres, dont la forme de base comprend respectivement une surface de base (452) disposée au niveau du côté intérieur du couvercle de récipient (4), une surface supérieure (453) orientée en direction de la région intérieure (25) de la coque (2) ainsi qu'une surface d'enveloppe (454) reliant l'une à l'autre la surface de base (452) et la surface supérieure (453), et dans lequel au moins une partie des corps creux (451) est ouverte en direction de la région intérieure (25) de la coque (2),
**caractérisé en ce que**
le couvercle de récipient (4) comprend au moins une ouverture de ventilation (46, 47),
**en ce qu'**au moins un filtre interchangeable (5) est disposé au niveau du couvercle de récipient (4), lequel filtre recouvre l'au moins une ouverture de ventilation (46, 47),
et **en ce qu'**au moins un couvercle de filtre (6) est disposé de manière amovible au niveau d'un côté extérieur, opposé à la région intérieure (25) de la coque (2), du couvercle de récipient (4), le couvercle de filtre (6) recouvrant l'au moins un filtre (5) au niveau du couvercle de récipient (4) et comprenant de préférence au moins un passage d'air (66, 67).

2. Récipient (1) selon la revendication 1,
**caractérisé en ce que**
sensiblement tous les corps creux (451) sont produits, et séparés de formes creuses adjacentes (451), par des nervures moulées par injection sur le couvercle de récipient (4) et formant les surfaces d'enveloppe (454) des formes de base.

3. Récipient (1) selon au moins l'une des revendications 1 ou 2,
**caractérisé en ce que**
la surface de base (452) et/ou la surface supérieure (453) de la forme de base des corps creux (451) sont configurées de manière polygonale, elliptique ou circulaire, la surface de base (452) et/ou la surface supérieure (453), en cas de configuration polygonale, comprenant de préférence un nombre d'angles n dans la plage de n = 3 à n = 10, de préférence encore un nombre d'angles n = 6.

4. Récipient (1) selon au moins l'une des revendications 1 à 3,
**caractérisé en ce que**
la surface de base (452) et la surface supérieure (453) sont sensiblement congruentes l'une par rapport à l'autre.

5. Récipient (1) selon au moins l'une des revendications 1 à 4,
**caractérisé en ce que**
l'au moins une ouverture de ventilation (46, 47) est disposée dans la région de la structure de surface tridimensionnelle (45).

6. Récipient (1) selon au moins l'une des revendications 1 à 5,
**caractérisé en ce que**
le couvercle de récipient (4) comprend, au niveau de son côté extérieur, un évidement (43) pour le filtre (5), l'évidement (43) étant disposé de préférence dans la région de la structure de surface tridimensionnelle (45).

7. Récipient (1) selon la revendication 6,
**caractérisé en ce que**
l'évidement (43) comprend une bordure (44) de type cadre pour l'insertion réversible du filtre (5).

8. Récipient (1) selon au moins l'une des revendications 1 à 7,
**caractérisé en ce que**
le couvercle de récipient (4) est constitué sensiblement d'une base de couvercle (42) et d'une jupe (41) périphérique autour de celle-ci du côté du bord, la structure de surface tridimensionnelle (45) étant disposée dans la région de la base de couvercle (42).

9. Récipient (1) selon la revendication 8,
**caractérisé en ce que**
l'évidement (43) s'étend sensiblement sur la base de couvercle (42) et/ou la jupe (41).

10. Récipient (1) selon au moins l'une des revendications 6 à 9,
**caractérisé en ce que**
le couvercle de filtre (6) est configuré sensiblement en forme de U en section transversale avec une première (61) et une deuxième branche (62) pour le positionnement sur la jupe (41) ainsi qu'une entretoise (63) reliant ces branches (61, 62), pour l'insertion dans l'évidement (43), et peut être inséré dans l'évidement (43) de telle sorte qu'il recouvre sensiblement complètement l'évidement (43), la bordure (44) de type cadre ainsi qu'un filtre (5) disposé dans la bordure (44) de type cadre.

11. Récipient (1) selon la revendication 10,
**caractérisé en ce que**
l'au moins un passage d'air (66, 67) est disposé dans la région de la première et/ou de la deuxième branche (61, 62) du couvercle de filtre (6) et est configuré de préférence en forme de fente.

12. Récipient (1) selon au moins l'une des revendications 1 à 11,
**caractérisé en ce que**
le récipient (1) comprend en outre au moins un insert formant panier (3), lequel peut être inséré dans la région intérieure (25) de la coque (2) et peut être retiré à nouveau, l'insert formant panier (3) étant configuré de préférence en tant que tamis.
